# EUROPEAN PATENT APPLICATION

(11) **EP 4 756 348 A2**
(43) Date of publication of application: **10.06.2026**
(21) Application number: 25218237.3
(22) Date of filing: 25.11.2025
(51) Int. Cl.: F28D 7/10, F28F 13/00

(54) **EVAPORATOR**

(30) Priority: 05.12.2024 JP 2024212551
(71) Applicant: NGK Insulators, Ltd., Nagoya-shi, Aichi 467-8530 (JP)
(72) Inventor: IWASAKI, Shinnosuke, Nagoya-shi, Aichi 467-8530 (JP); KAWAGUCHI, Tatsuo, Nagoya-shi, Aichi 467-8530 (JP); SAIKI, Katsumi, Nagoya-shi, Aichi 467-8530 (JP)
(74) Representative: MERH-IP Matias Erny Reichl Hoffmann Patentanwälte PartG mbB

(57) **Abstract**

An evaporator includes: a cylindrical member 10 through which a heating medium can flow; a heat exchange structure provided on a radially inner side of the cylindrical member 10; and a jacket member 30 provided on a radially outer side of the cylindrical member 10 with a space so as to define a flow path for a liquid and a vapor thereof, the jacket member 30 having a feed port 31 for a liquid M1 and a discharge port 32 for a vapor.

## Description

### FIELD OF THE INVENTION

This invention relates to an evaporator.

### BACKGROUND OF THE INVENTION

Vapor, such as water vapor, is used in various fields, including humidifiers, absorption type chillers, and fuel cells.

One method for generating vapor is to use an evaporator (heat exchanger). For example, a conventional evaporator usable for generating vapor is a fin-tube heat exchanger in which fins are attached to tubes (heat transfer tubes). Although fin-tube heat exchangers have high durability and reliability, they tend to become large in size because larger fins are required to improve heat exchange efficiency and increase an amount of vapor generated.

Therefore, from the viewpoint of improving heat exchange efficiency and achieving compactness, a plate-fin laminated heat exchanger has been proposed (e.g., Patent Literature 1). The plate-fin laminated heat exchanger can reduce a cross-sectional area of a heat transfer flow path compared to the fin-tube heat exchanger, thereby achieving improved heat exchange efficiency and reduced size.

However, since the plate-fin laminated heat exchanger has a laminated structure, its pressure resistance and strength are lower, resulting in lower durability and reliability.

Further, a plate heat exchanger is also known in which a plurality of plates are stacked and joined at predetermined portions between the plates using a brazing material or the like (e.g., Patent Literatures 2 to 4).

However, the plate heat exchangers are prone to assembly errors, and the medium flowing inside may leak due to misalignment of openings or the like. Moreover, joints made with brazing materials have low pressure resistance and strength, resulting in poor durability and reliability. Furthermore, in the plate heat exchangers provided with corrugated plates, the width of the flow path in the stacking direction of the plates is not uniform, making uniform heat exchange difficult and possibly causing unstable vapor generation.

On the other hand, heat exchangers including honeycomb structures are also known (e.g., Patent Literature 5). Such heat exchangers can achieve heat exchange performance equal to or greater than that of the plate heat exchangers, while also providing high durability and reliability.

However, since the heat exchangers are mainly intended for heat exchange between an exhaust gas and a refrigerant, their flow path structures are not suitable for vapor generation, and cannot produce sufficient vapor.

### PRIOR ART

### Patent Literatures

[Patent Literature 1] Japanese Patent No. 7455290 B
[Patent Literature 2] Japanese Patent Application Publication No. 2022-61054 A
[Patent Literature 3] Japanese Patent Application Publication No. 2022-92367 A
[Patent Literature 4] Japanese Patent Application Publication No. 2023-37963 A
[Patent Literature 5] WO 2016/185963 A1

### SUMMARY OF THE INVENTION

### Problem to be Solved by the Invention

This invention has been made to solve the above problems, and an object of this invention is to provide an evaporator that can stably generate vapor, can be easily produced, can have highly durable and reliable, and can be made compact.

### Means for Solving the Problem

As results of intensive studies for evaporators, the present inventors have found that a predetermined structure can solve the above problems, and have completed the invention. In other words, this invention is exemplified as follows:
<1> A vehicle air conditioning system, comprising:
   a cylindrical member through which a heating medium can flow;
   a heat exchange structure provided on a radially inner side of the cylindrical member; and
   a jacket member provided on a radially outer side of the cylindrical member with a space so as to define a flow path for a liquid and a vapor thereof, the jacket member having a feed port for a liquid and a discharge port for a vapor.
<2> The evaporator according to <1>, wherein the flow path may include an evaporation region for evaporating the liquid and a heating region for heating the vapor.
<3>The evaporator according to <1> or <2>, wherein the evaporator may include: an evaporating structure element including the cylindrical member, a first heat exchange structure provided on a radially inner side of the cylindrical member, and the jacket member having a feed port for the liquid; and a heating structure element including the cylindrical member, a second heat exchange structure provided on a radially inner side of the cylindrical member, the jacket member having a discharge port for the vapor, and a third heat exchange structure provided between the cylindrical member and the jacket member; and
   wherein the evaporating structure element and the heating structure element are directly or indirectly connected to each other.
<4> The evaporator according to <1> or <2>, wherein the heat exchange structure may be a honeycomb structure including an outer peripheral wall and partition walls provided on an inner side of the outer peripheral wall, the partition walls defining a plurality of cells each extending from a first end face to a second end face of the honeycomb structure; and
   wherein the heating medium can flow through the cells of the honeycomb structure.
<5> The evaporator according to <1> or <2>, wherein the heat exchange structure may be a hollow honeycomb structure including an outer peripheral wall, an inner peripheral wall, and partition walls provided between the outer peripheral wall and the inner peripheral wall, the partition walls defining a plurality of cells each extending from a first end face to a second end face of the hollow honeycomb structure; and
   wherein the heating medium can flow through the cells of the hollow honeycomb structure.
<6> The evaporator according to <5>, wherein an inner side of the inner peripheral wall may be provided with a blocking member for preventing the heating medium from flowing in.
<7> The evaporator according to <3>, wherein the first heat exchange structure and the second heat exchange structure may be a honeycomb structure including an outer peripheral wall and partition walls provided on an inner side of the outer peripheral wall, the partition walls defining a plurality of cells each extending from a first end face to a second end face of the honeycomb structure, or a hollow honeycomb structure including an outer peripheral wall, an inner peripheral wall, and partition walls provided between the outer peripheral wall and the inner peripheral wall, the partition walls defining a plurality of cells each extending from a first end face to a second end face of the honeycomb structure, and the heating medium can flow through the cells of the honeycomb structure or the hollow honeycomb structure; and
   wherein the third heat exchange structure may be a hollow honeycomb structure including an outer peripheral wall, an inner peripheral wall, and partition walls provided between the outer peripheral wall and the inner peripheral wall, the partition walls defining a plurality of cells each extending from a first end face to a second end face of the hollow honeycomb structure, and the vapor can flow through the cells of the hollow honeycomb structure.
<8> The evaporator according to any one of <1> to <7>, wherein a flow direction of the heating medium may be opposite to a flow direction of the liquid and the vapor thereof.
<9> The evaporator according to any one of <1> to <8>, wherein the evaporator is a vertical type evaporator provided such that an axial direction of the cylindrical member is parallel to a vertical direction.
<10> The evaporator according to <9>, wherein the evaporation region is located below and the heating region is located above.
<11> The evaporator according to <10>, wherein the jacket member further includes a feed port for a gas.
<12> The evaporator according to <11>, wherein a pipe having a plurality of discharge ports disposed in a flow path between the cylindrical member and the jacket member so as to cover a radially outer side of the cylindrical member may be introduced through the feed port for the gas, and the gas can be discharged from the discharge ports.
<13> The evaporator according to <9>, wherein the evaporation region may be located above and the heating region is located below.
<14> The evaporator according to <13>, wherein the evaporation region may be provided with at least one selected from a honeycomb structure, a metal fin, a mesh material, and a porous body.
<15> The evaporator according to <13>, wherein a pipe having a plurality of discharge ports disposed in a flow path between the cylindrical member and the jacket member so as to cover a radially outer side of the cylindrical member may be introduced through the feed port for the liquid, and the liquid can be discharged from the discharge ports.
<16> The evaporator according to any one of <1> to <8>, wherein the evaporator may be a horizontal type evaporator disposed such that an axial direction of the cylindrical member is parallel to a horizontal direction.
<17> The evaporator according to <16>, wherein a part of a boundary between the evaporation region and the heating region may be provided with a separator for preventing the liquid from flowing from the evaporation region into the heating region.
<18> The evaporator according to <16> or <17>, wherein the evaporation region may be provided with at least one selected from a honeycomb structure, a metal fin, a mesh material, and a porous body.
<19> The evaporator according to any one of <1> to <18>, wherein the liquid is water.

### Effects of the Invention

According to this invention, it is possible to provide an evaporator that can stably generate vapor, can be easily produced, can have highly durable and reliable, and can be made compact.

### BRIEF DESCRIPTION OF THE DRAWINGS

FIG. 1 is a cross-sectional view of an evaporator according to Embodiment 1 of this invention, which is parallel to a flow direction of a heating medium;
FIG. 2A is a cross-sectional view of a honeycomb structure, which is parallel to an extending direction of cells;
FIG. 2B is a cross-sectional view taken along the line a-a' of the honeycomb structure shown in FIG. 2A;
FIG. 3 is a cross-sectional view of an evaporator according to Embodiment 2 of this invention, which is parallel to a flow direction of a heating medium;
FIG. 4 is a cross-sectional view of an evaporator according to Embodiment 3 of this invention, which is parallel to a flow direction of a heating medium;
FIG. 5A is a cross-sectional view of a hollow honeycomb structure, which is parallel to an extending direction of cells;
FIG. 5B is a cross-sectional view taken along the line b-b' of the hollow honeycomb structure shown in FIG. 5A:
FIG. 6 is a cross-sectional view of an evaporator according to Embodiment 4 of this invention, which is parallel to a flow direction of a heating medium;
FIG. 7 is a schematic view illustrating a method for introducing a pipe from a feed port;
FIG. 8 is a cross-sectional view of an evaporator according to Embodiment 5 of this invention, which is parallel to a flow direction of a heating medium;
FIG. 9 is a cross-sectional view of an evaporator according to Embodiment 6 of this invention, which is parallel to a flow direction of a heating medium;
FIG. 10 is a cross-sectional view of an evaporator according to Embodiment 7 of this invention, which is parallel to a flow direction of a heating medium;
FIG. 11 is a cross-sectional view of an evaporator according to Embodiment 8 of this invention, which is parallel to a flow direction of a heating medium.

### DETAILED DESCRIPTION OF THE INVENTION

The evaporator of this invention includes: a cylindrical member through which a heating medium can flow, a heat exchange structure provided on a radially inner side of the cylindrical member; and a jacket member provided at a distance on a radially outer side of the cylindrical member so as to form a flow path for a liquid and a vapor thereof, the jacket member having a feed port for a liquid and a discharge port for a vapor. With such a structure, the evaporator can stably generate a vapor, can be easily produced, can have high durability and reliability, and can be made compact. Specifically, the evaporator can be made compact because of the high heat exchange efficiency between the heating medium and the liquid. In addition, the evaporator has high pressure resistance because its components are arranged coaxially, and high strength because it can be produced by welding, thereby ensuring durability and reliability. Moreover, since the evaporator has a simple structure and is free from assembly errors, leakage of the heating medium and the liquid can be suppressed. Furthermore, because the evaporator has a flow path structure suitable for vapor generation, the vapor can be stably produced.

As used herein, the term "evaporator" means a device capable of vaporizing (evaporating) a liquid. Specifically, the evaporator is a device in which a liquid exchanges heat with a heating medium and is vaporized as it absorbs heat.

Hereinafter, embodiments of the invention will be specifically described with reference to the drawings. It should be understood that the invention is not limited to the following embodiments, and those which have appropriately added changes, improvements and the like to the following embodiments based on knowledge of a person skilled in the art without departing from the spirit of the invention fall within the scope of the invention.

### <Embodiment 1>

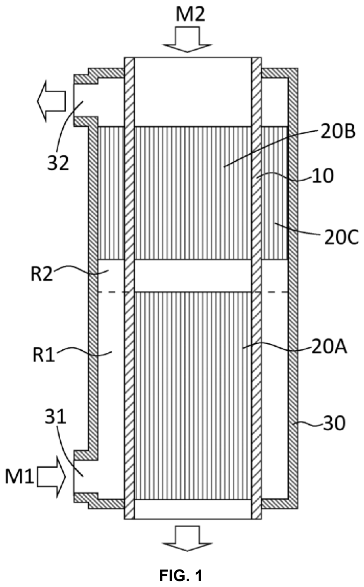

FIG. 1 is a cross-sectional view of an evaporator according to Embodiment 1 of this invention, which is parallel to a flow direction of a heating medium.

As shown in FIG. 1, the evaporator according to Embodiment 1 of this invention includes: a cylindrical member 10; heat exchange structures (a first heat exchange structure 20A, a second heat exchange structure 20B, and a third heat exchange structure 20C); and a jacket member 30. The cylindrical member 10 allows a heating medium M2 to flow through its interior. The first heat exchange structure 20A and the second heat exchange structure 20B are disposed on the radially inner side of the cylindrical member 10. The first heat exchange structure 20A and the second heat exchange structure 20B may alternatively be formed as a single heat exchange structure extending across both an evaporation region R1 and a heating region R2. The third heat exchange structure 20C is disposed between the cylindrical member 10 and the jacket member 30 in the heating region R2. The jacket member 30 is disposed at a distance on a radially outer side of the cylindrical member 10 so as to form a flow path for a liquid M1 and a vapor thereof, and has a feed port 31 for the liquid M1 and a discharge port 32 for the vapor. The flow path formed between the cylindrical member 10 and the jacket member 30 includes an evaporation region R1 for evaporating the liquid M1 and the heating region R2 for heating the vapor. This heat exchanger is a vertical type evaporator in which an axial direction of the cylindrical member 10 is parallel to the vertical direction, with the evaporation region R1 located below and the heating region R2 located above.

As used herein, the term "evaporation region R1" refers to a flow path located on the radially outer side of the cylindrical member 10 in which the first heat exchange structure 20A is disposed, and this region corresponds to an upstream portion of the flow path with respect to the flow direction of the liquid M1 and the vapor. The term "heating region R2" refers to a flow path located on the radially outer side of the cylindrical member 10 in which the second heat exchange structure 20B is disposed, and this region corresponds to a downstream portion of the flow path with respect to the flow direction of the liquid M1 and the vapor.

In the evaporator according to Embodiment 1 of this invention, when the liquid M1 is fed from the feed port 31, the liquid M1 vaporizes (evaporates) through heat exchange with the heating medium M2 flowing inside the cylindrical member 10 in the evaporation region R1. The vapor then flows into the heating region R2, is heated, and is discharged from the discharge port 32. Accordingly, this evaporator can stably generate vapor. In addition, since the evaporator has a simple structure composed of the cylindrical member 10, the heat exchange structures (the first heat exchange structure 20A, the second heat exchange structure 20B, and the third heat exchange structure 20C), and the jacket member 30, it can be easily produced, can have high durability and reliability, and can be easily made compact.

Hereinafter, the detailed structure of the evaporator will be described.

### (Cylindrical Member 10)

The cylindrical member 10 allows a heating medium M2 to flow through its interior. The cylindrical member 10 also partially accommodates, in its interior, the heat exchange structures (the first heat exchange structure 20A and the second heat exchange structure 20B).

Further, diameters (an outer diameter and an inner diameter) of the cylindrical member 10 may be uniform in the axial direction, but the diameter of at least a part (for example, both ends in the axial direction or the like) of the cylindrical member 20 may be decreased or increased.

The cylindrical member 10 is preferably made of a metal in terms of manufacturability, although not particularly limited thereto. Further, the metallic cylindrical member 10 is also preferable in that it can be easily welded to a jacket member 30 that will be described below. Examples of the material of the cylindrical member 10 that can be used herein include stainless steel, titanium alloys, copper alloys, aluminum alloys, brass and the like. Among them, the stainless steel is preferable because it has high durability and reliability and is inexpensive.

The cylindrical member 10 preferably has a thickness of 0.1 mm or more, and more preferably 0.3 mm or more, and still more preferably 0.5 mm or more, although not particularly limited thereto. The thickness of the cylindrical member 10 of 0.1 mm or more can allow durability and reliability to be ensured. The thickness of the cylindrical member 10 is preferably 10 mm or less, and more preferably 5 mm or less, and still more preferably 3 mm or less. The thickness of the cylindrical member 10 of 10 mm or less can reduce the weight of the evaporator and improve heat recovery performance.

### (Heat Exchange Structures)

The first heat exchange structure 20A and the second heat exchange structure 20B are disposed on the radially inner side (inside) of the cylindrical member 10. Specifically, the first heat exchange structure 20A is disposed on the radially inner side (inside) of the cylindrical member 10 on the downstream side in the flow direction of the heating medium M2. The second heat exchange structure 20B is disposed on the radially inner side (inside) of the cylindrical member 10 on the upstream side in the flow direction of the heating medium M2.

The third heat exchange structure 20C is disposed between the cylindrical member 10 and the jacket member 30 in the heating region R2.

The first heat exchange structure 20A and the second heat exchange structure 20B are not particularly limited as long as they have a structure that can transfer heat from the heating medium M2 to the cylindrical member 10, and various known structures can be employed. Also, the third heat exchange structure 20C is not particularly limited as long as it has a structure that can heat the vapor using heat transferred from the cylindrical member 10, and various known structures may be employed. For example, as the first heat exchange structure 20A and the second heat exchange structure 20B, a known heat exchanger having fins or the like inside the cylindrical member 10 can be used. Among them, the first heat exchange structure 20A and the second heat exchange structure 20B are preferably honeycomb structures from the viewpoint of heat exchange efficiency. As the third heat exchange structure 20C, a known heat exchanger having fins or the like on the outer side of the cylindrical member 10 may be used. Among them, the third heat exchange structure 20C is preferably a hollow honeycomb structure from the viewpoint of vapor heating efficiency.

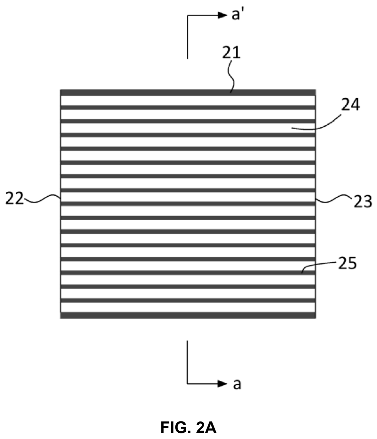

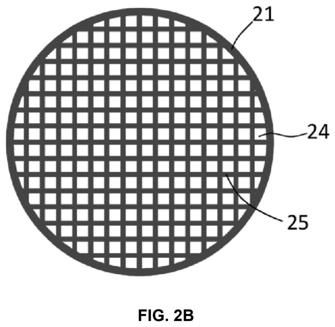

Here, FIG. 2A illustrates a cross-sectional view of a honeycomb structure usable for the first heat exchange structure 20A and the second heat exchange structure 20B, which is parallel to the extending direction of the cells, and FIG. 2B shows a cross-sectional view taken along the line a-a' of the honeycomb structure in FIG. 2A, which is orthogonal to the extending direction of the cells.

As illustrated in FIG. 2A, the honeycomb structure includes an outer peripheral wall 21 and partition walls 25 provided on the inner side of the outer peripheral wall 21, the partition walls 25 defining a plurality of cells 24 each extending from a first end face 22 to a second end face 23 of the honeycomb structure. The honeycomb structure is disposed on the radially inner side of the cylindrical member 10, and the heating medium M2 flows through the cells 24 of the honeycomb structure. By using honeycomb structures having such structures as the first heat exchange structure 20A and the second heat exchange structure 20B, the heat of the heating medium M2 flowing through the cells 24 can be efficiently transferred to the liquid M1 flowing along the outer periphery of the cylindrical member 10.

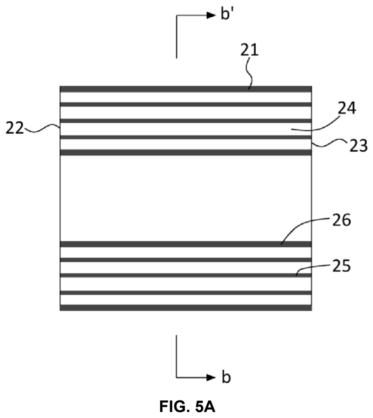

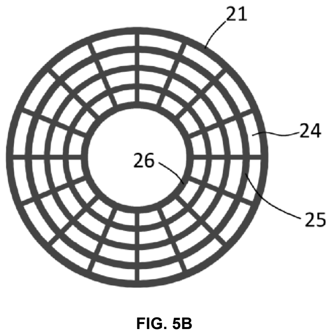

FIG. 5A illustrates a cross-sectional view of a hollow honeycomb structure usable as the third heat exchange structure 20C, which is parallel to the extending direction of the cells, and FIG. 5B illustrates a cross-sectional view taken along the line b-b' of the hollow honeycomb structure in FIG. 5A, which is orthogonal to the extending direction of the cells.

As illustrated in FIG. 5A, the hollow honeycomb structure includes an outer peripheral wall 21, an inner peripheral wall 26, and partition walls 25 provided between the outer peripheral wall 21 and the inner peripheral wall 26, the partition walls 25 defining a plurality of cells 24 each extending from a first end face 22 to a second end face 23 of the hollow honeycomb structure. The hollow honeycomb structure is provided on a radially outer side (outside) of the cylindrical member 10, and the heating medium M2 (vapor) flows through the cells 24 of the hollow honeycomb structure. By using such a hollow honeycomb structure as the third heat exchange structure 20C, the vapor can be efficiently heated.

The method for providing the honeycomb structure in the cylindrical member 10 is not particularly limited, but it is preferable that the cylindrical member 10 is fitted to the outer peripheral wall 21 of the honeycomb structure. Fixing by fitting makes it possible to suppress positional displacement of the honeycomb structure inside the cylindrical member 10. The method for providing the hollow honeycomb structure between the cylindrical member 10 and the jacket member 30 is not particularly limited; however, it is preferable that the cylindrical member 10 is fitted to the inner peripheral wall 26 of the hollow honeycomb structure, and the jacket member 30 is fitted to the outer peripheral wall 21 of the hollow honeycomb structure. Fixing by fitting can prevent positional displacement of the hollow honeycomb structure between the cylindrical member 10 and the jacket member 30.

As used herein, the term "fitted" means that members are fixed in a state of being suited to each other. Therefore, the fitting includes cases where the members are fixed to each other by a fixing method based on fitting such as clearance fitting, interference fitting and shrinkage fitting, as well as by brazing, welding, diffusion bonding, or the like.

The shape (outer shape) of the honeycomb structure is not particularly limited and may be appropriately selected according to the shape of the cylindrical member 10. For example, the shape (outer shape) of the honeycomb structure may be, for example, a circular shape as shown in FIG. 2B, as well as an elliptical shape, a quadrangular shape or other polygonal shape, in a cross section orthogonal to the extending direction of the cells 24.

The outer shape and the shape of the hollow portion of the hollow honeycomb structure are not particularly limited and may be appropriately selected according to the shapes of the cylindrical member 10 and the jacket member 30. For example, the outer shape and the shape of the hollow portion of the hollow honeycomb structure may be, for example, a circular shape as shown in FIG. 5B, as well as an elliptical shape, a quadrangular shape or other polygonal shape, in a cross section orthogonal to the extending direction of the cells 24.

Each cell 24 may have any shape, including, but not particularly limited to, a quadrangular shape as shown in FIG. 2B, as well as circular, elliptical, triangular, hexagonal or other polygonal shapes in the cross section orthogonal to the extending direction of the cells 24.

Since the outer peripheral wall 21 is a portion of the outer surface of the honeycomb structure, it is preferably thicker than the partition walls 25 from the viewpoint of increasing resistance to external shock. Specifically, the thickness of the outer peripheral wall 21 is preferably 1.2 to 15 times the thickness of the partition walls 25, and more preferably 1.5 to 10 times. By thus controlling the thickness of the outer peripheral wall 21, it is possible to improve resistance to external impacts, and the like.

The thickness of the outer peripheral wall 21 is not particularly limited, but it is preferably 0.1 to 10 mm, and more preferably 0.5 to 5 mm, and even more preferably 1 to 3 mm.

The thickness of the partition walls 25 is not particularly limited, but it is preferably 0.05 to 1.0 mm, and more preferably 0.2 to 0.6 mm. The thickness of the partition walls 25 of 0.05 mm or more can provide the honeycomb structure with a sufficient mechanical strength. Further, the thickness of the partition walls 25 of 1.0 mm or less can suppress problems that the pressure loss is increased due to a decrease in an opening area, and the like.

The diameter (outer diameter) of the outer peripheral wall 21 of each of the honeycomb structure and the hollow honeycomb structure in the cross section orthogonal to the extending direction of the cells 24 is from 20 to 200 mm, and more preferably from 30 to 150 mm, although not particularly limited thereto. Such a diameter can improve the heat recovery efficiency. When the shape of the outer peripheral wall 21 is not circular, the diameter of the largest inscribed circle that is inscribed in the cross-sectional shape of the outer peripheral wall 21 is defined as the diameter of the outer peripheral wall 21.

The partition walls 25 may include first partition walls each extending circumferentially and second partition walls each extending radially in the cross section orthogonal to the extending direction of the cells 24 of the honeycomb structure (see, for example, FIG. 5B described later). With such a configuration, heat exchange between the heating medium M2 flowing through the cells 24 and the liquid M1 flowing along the outer periphery of the cylindrical member 10 can be efficiently performed, thereby facilitating vaporization (evaporation) of the liquid M1.

The thickness of the outer peripheral wall 26 of the hollow honeycomb structure is not particularly limited, but it is preferably 0. 1 mm to 10 mm, and more preferably 0.5 mm to 5 mm, and even more preferably 1 mm to 3 mm, in terms of ensuring resistance to thermal stress.

Also, the diameter (inner diameter) of the inner peripheral wall 26 of the hollow honeycomb structure in the cross section orthogonal to the extending direction of the cells 24 is from 1 to 50 mm, and more preferably from 2 to 30 mm, although not particularly limited thereto. When the cross-sectional shape of the inner peripheral wall 26 is not circular, the diameter of the largest inscribed circle that is inscribed in the cross-sectional shape of the inner peripheral wall 26 is defined as the diameter of the inner peripheral wall 26.

The honeycomb structure (outer peripheral wall 21 and partition walls 25) and the hollow honeycomb structure (outer peripheral wall 21, partition walls 25, and inner peripheral wall 26) preferably contain ceramics as a main component. The phrase "contain ceramics as a main component" means that a ratio of a mass of ceramics to a mass of the total component is 50% by mass or more. The ceramics can be used to reduce weight while inhibiting rust and deformation.

The ceramics are not limited, but silicon carbide (SiC) is preferred as the main component. Examples of the ceramics containing silicon carbide (SiC) as a main component includes Si-impregnated SiC, (Si + Al)-impregnated SiC, a metal composite SiC, recrystallized SiC, Si₃N₃, SiC, and the like. Among them, Si-impregnated SiC and (Si + Al)-impregnated SiC are preferably used because they can allow for production at lower cost and have high thermal conductivity.

A cell density of each of the honeycomb structure and the hollow honeycomb structure (that is, the number of cells 24 per unit area) in the cross section orthogonal to the extending direction of the cells 24 is preferably in a range of from 4 to 320 cells/cm², although not particularly limited thereto. The cell density of 4 cells/cm² or more can sufficiently ensure the strength of the partition walls 25, hence the strength of the honeycomb structure and the hollow honeycomb structure and effective GSA (geometrical surface area). Further, the cell density of 320 cells/cm² or less can allow for prevention of an increase in a pressure loss when the heating the medium M2 or the vapor flows can be suppressed.

Each of the honeycomb structure and the hollow honeycomb structure preferably has an isostatic strength of 100 MPa or more, and more preferably 150 MPa or more, and still more preferably 200 MPa or more, although not particularly limited thereto. The isostatic strength of each of the honeycomb structure and the hollow honeycomb structure of 100 MPa or more can lead to the honeycomb structure and the hollow honeycomb structure each having improved durability.

As used herein, the isostatic strength can be measured according to the method for measuring isostatic strength as defied in the JASO standard M505-87 which is a motor vehicle standard issued by Society of Automotive Engineers of Japan, Inc.

Each of the honeycomb structure and the hollow honeycomb structure preferably has a thermal conductivity of 50 W/(m·K) or more at 25 °C, and more preferably from 100 to 300 W/(m·K), and even more preferably from 120 to 300 W/(m K), although not particularly limited thereto. The thermal conductivity of each of the honeycomb structure and the hollow honeycomb structure in such a range allows the heat from the heating medium M2 to be efficiently transferred to the liquid M1, thereby promoting vaporization (evaporation) of the liquid M1.

As used herein, the phrase "thermal conductivity" is a value measured according to the laser flash method (JIS R 1611-1997).

### (Method for Producing Honeycomb Structure and Hollow Honeycomb Structure)

The honeycomb structure and the hollow honeycomb structure can be produced according to methods known in the art. For example, the honeycomb structure and the hollow honeycomb structure can be produced in accordance with the method described below.

First, a green body containing ceramic powder is extruded into a desired shape to prepare a honeycomb formed body or a hollow honeycomb formed body. At this time, the thicknesses of the outer peripheral wall 21, partition walls 25, and inner peripheral wall 26, as well as the shape of the cells 24 and the cell density, and the like, can be controlled by selecting dies and jigs in appropriate forms. For example, when producing a honeycomb formed body or a hollow honeycomb formed body containing the Si-impregnated SiC composite as a main component, a binder and water or an organic solvent are added to a predetermined amount of SiC powder, and the resulting mixture is kneaded to form a green body, which can be then formed into a honeycomb formed body having a desired shape.

The honeycomb formed body or hollow honeycomb formed body can be impregnated with metallic Si and fired under reduced pressure in an inert gas or in vacuum to obtain a honeycomb structure or a hollow honeycomb structure.

### (Jacket Member 30)

The jacket member 30 is disposed at a space so as to form a flow path for the liquid M1, which is disposed on a radially outer side of the first cylindrical member 10.

It is preferable that the axial direction of the jacket member 30 coincides with that of the cylindrical member 10 and the heat exchange structure, and that the central axis of the jacket member 30 coincides with that of the cylindrical member 10 and the heat exchange structure.

The jacket member 30 has a feed port 31 for the liquid M1 and a discharge port 32 for the vapor. The feed port 31 is provided in the evaporation region R1, and the discharge port 32 is provided in the heating region R2. In particular, from the viewpoint of sufficiently evaporating the liquid M1, it is preferable that the feed port 31 is provided at an upstream position in the evaporation region R1 with respect to the flow direction of the liquid M1 and the vapor. Further, from the viewpoint of sufficiently heating the vapor, it is preferable that the discharge port 32 is provided at a downstream position in the heating region R2 with respect to the flow direction of the liquid M1 and the vapor.

The jacket member 30 is preferably arranged such that inner peripheral surfaces at an upstream end portion and a downstream end portion are in direct or indirect contact with the outer peripheral surface of the cylindrical member 10 with respect to the flow direction of the liquid M1 and the vapor.

A method of fixing the inner peripheral surfaces at the upstream side end portion and the downstream side end portion of the jacket member 30 to the outer peripheral surface of the cylindrical member 10 that can be used herein includes, but not limited to, fixing methods using fitting such as clearance fitting, interference fitting and shrinkage fitting, as well as brazing, welding, diffusion bonding, and the like.

Diameters (an outer diameter and an inner diameter) of the jacket member 30 may be uniform in the axial direction, but the diameter of at least a part (for example, a central portion in the axial direction, both ends in the axial direction, or the like) of the jacket member may be decreased or increased.

The material of the jacket member 30 is not limited and can be the same as that described above for the material of the cylindrical member 10.

The thickness of the jacket member 30 is not limited and can be the same as that described above for the thickness of the cylindrical member 10.

### (Method for Producing Evaporator)

The evaporator 10 according to Embodiment 1 of the present invention can be produced using each member as described above, in accordance with a known method in the art. For example, the evaporator 10 can be produced in accordance with a producing method as described below.

First, the first heat exchange structure 20A and the second heat exchange structure 20B are inserted into the cylindrical member 10 and fixed at predetermined positions. The third heat exchange structure 20C and the jacket member 30 are then arranged on the radially outer side of the cylindrical member 10 and fixed in place.

In addition, the arranging and fixing (fitting) orders of the respective members are not limited to the above orders, and they may be changed as needed within a range in which the members can be produced. As the fixing method, the above method may be used.

### (Method for Using Evaporator)

In the evaporator according to Embodiment 1 of this invention, the liquid M1 is fed through the feed port 31 of the jacket member 30. The liquid M1 fed to the evaporation region R1 undergoes heat exchange with the heating medium M2 via the first heat exchange structure 20A inside the cylindrical member 10, whereby the liquid M1 vaporizes (evaporates). The vapor generated in the evaporation region R1 flows into the heating region R2. In the heating region R2, the heat exchanged with the heating medium M2 by the second heat exchange structure 20B inside the cylindrical member 10 is transferred to the third heat exchange structure 20C through the cylindrical member 10. Since the third heat exchange structure 20C has a large heat transfer surface area, it can efficiently heat the vapor. Thereafter, the heated vapor is discharged through the discharge port 32. The discharged vapor is fed to a predetermined location for use via piping or other means connected to the discharge port 32.

The liquid M1 used in the evaporator can be appropriately selected depending on the application of the evaporator and is not particularly limited; however, when the evaporator is used for generating water vapor, the liquid M1 is water.

The heating medium M2 used in the evaporator is not particularly limited and may be in either a liquid or gaseous state. For example, an exhaust gas discharged from an internal combustion engine can be used as the heating medium M2.

The flow direction of the heating medium M2 and the flow direction of the liquid M1 and its vapor are not particularly limited; however, from the viewpoint of heat exchange efficiency, it is preferable that the flow direction of the heating medium M2 and that of the liquid M1 and its vapor are opposite to each other, as illustrated in FIG. 1.

When the flow direction of the heating medium M2 and the flow direction of the liquid M1 and the vapor thereof are the same, the positions of the feed port 31 and the discharge port 32 of the jacket member 30 may be reversed in the evaporator shown in FIG. 1.

### <Embodiment 2>

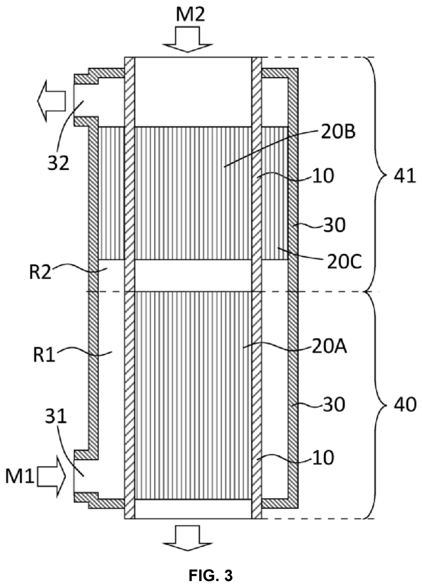

FIG. 3 is a cross-sectional view of an evaporator according to Embodiment 2 of this invention, which is parallel to the flow direction of the heating medium. It should be noted that components with the same numerical numbers as those appearing in the descriptions of the evaporator according to Embodiment 1 of the present invention are the same as the components of the evaporator according to Embodiment 2 of the present invention. Therefore, detailed descriptions of the same components will be omitted and the different components will be described.

As illustrated in FIG. 3, the evaporator according to Embodiment 2 of this invention includes: an evaporation structure element 40 including a cylindrical member 10, a first heat exchange structure 20A, and a jacket member 30 having a feed port 31 for the liquid M1; and a heating structure element 41 including a cylindrical member 10, a jacket member 30 having an discharge port 32 for vapor, a second heat exchange structure 20B, and a third heat exchange structure 20C. The evaporation structure element 40 and the heating structure element 41 are directly connected to each other. Here, the evaporation structure element 40 and the heating structure element 41 may alternatively be indirectly joined via another member such as a joining member.

The evaporator according to Embodiment 2 of this invention corresponds to that of Embodiment 1 in which the portion including the evaporation region R1 (evaporation structure element 40) and the portion including the heating region R2 (heating structure element 41) are separately prepared and then joined together. Thus, the evaporator according to Embodiment 2 can be produced by preparing the evaporation structure element 40 and the heating structure element 41 in accordance with the producing method of the evaporator of Embodiment 1, and then joining them directly or indirectly. The joining method is not particularly limited, and any known technique such as welding may be employed.

Therefore, the evaporator according to Embodiment 2 of this invention is identical to that of Embodiment 1 with the exception that the evaporation structure element 40 and the heating structure element 41 are separately prepared and produced, and thus it can be used in the same manner and provides the same effects. In other words, the evaporator according to Embodiment 2 of this invention can stably generate vapor, can be easily produced, can have high durability and reliability, and can be easily made compact.

### <Embodiment 3>

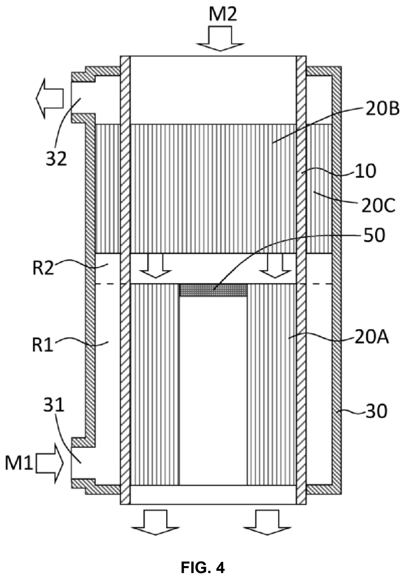

FIG. 4 is a cross-sectional view of an evaporator according to Embodiment 3 of this invention, which is parallel to the flow direction of the heating medium. The components with the same reference numerals as those appearing in the descriptions of the evaporator according to Embodiments 1 and 2 are the same as the components of the evaporator according to Embodiment 3 of the present invention. Therefore, detailed descriptions of the same components will be omitted and the different components will be described.

As illustrated in FIG. 4, the evaporator according to Embodiment 3 of this invention includes a hollow first heat exchange structure 20A having a cavity at its center in a cross section orthogonal to the flow direction of the heating medium M2, and a blocking member 50 disposed in the hollow portion. A hollow honeycomb structure can be used as the first heat exchange structure 20A having the structure as described above.

Here, FIG. 5A illustrates a cross-sectional view of the hollow honeycomb structure, which is parallel to the extending direction of the cells, and FIG. 5B illustrates a cross-sectional view taken along the line b-b' in FIG. 5A (a cross section orthogonal to the extending direction of the cells).

As illustrated in FIG. 5A, the hollow honeycomb structure includes an outer peripheral wall 21, an inner peripheral wall 26, and partition walls 25 provided between the outer peripheral wall 21 and the inner peripheral wall 26, the partition walls 25 defining a plurality of cells 24 each extending from a first end face 22 to a second end face 23 of the hollow honeycomb structure. The hollow honeycomb structure is disposed on the radially inner side (inside) of the cylindrical member 10, and the heating medium M2 flows through the cells 24 of the hollow honeycomb structure. The inner side of the inner peripheral wall 26 of the hollow honeycomb structure is provided with a blocking member 50 for preventing the heating medium M2 from flowing in. By disposing the hollow honeycomb structure and the blocking member 50 inside the cylindrical member 10, the heat transfer distance of the heating medium M2 is shortened, thereby allowing the heat of the heating medium M2 to be transferred more efficiently to the liquid M1 flowing along the outer periphery of the cylindrical member 10.

The details of the hollow honeycomb structure are as described above, and therefore will not be repeated here.

The blocking member 50 is not particularly limited as long as it can prevent the heating medium M2 from flowing in. Since the blocking member 50 is exposed to the heating medium M2, it preferably has resistance to the heating medium M2. The blocking member 50 may be formed of, for example, ceramics, glass, or metal.

The position of the blocking member 50 is not particularly limited as long as it can prevent the heating medium M2 from flowing in the hollow portion (the region inside the inner peripheral wall 26), but it is preferably located on an upstream side with respect to the flow direction of the heating medium M2.

The method for fixing the blocking member 50 that can be used herein includes, but not limited to, fitting such as clearance fitting, interference fitting and shrinkage fitting, as well as brazing, welding, diffusion bonding, and the like.

In the above descriptions, the features of the evaporator according to Embodiment 3 of this invention were described with reference to the evaporator of Embodiment 1, but the same effects can also be obtained when the features of the evaporator according to Embodiment 3 are applied to the evaporator according to Embodiment 2.

### <Embodiment 4>

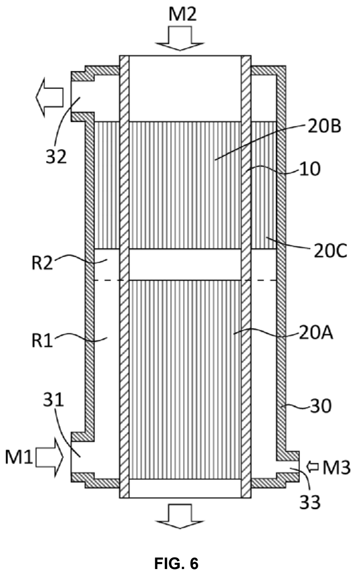

FIG. 6 is a cross-sectional view of an evaporator according to Embodiment 4 of this invention, which is parallel to the flow direction of the heating medium. The components with the same reference numerals as those appearing in the descriptions of the evaporator according to Embodiments 1 to 3 are the same as the components of the evaporator according to Embodiment 4 of this invention. Therefore, detailed descriptions of the same components will be omitted and the different components will be described.

As shown in FIG. 6, the evaporator according to Embodiment 4 of this invention includes a jacket member 30 further provided with a feed port 33 for a gas M3. By feeding the gas M3 from the feed port 33, the liquid M1 fed from the feed port 31 is agitated, thereby facilitating vaporization (evaporation) of the liquid M1.

Since it is necessary to agitate the liquid M1, the feed port 33 for the gas M3 is provided in the evaporation region R1, as with the feed port 31 for the liquid M1. In particular, from the viewpoint of sufficiently agitating the liquid M1 to promote its vaporization (evaporation), it is preferable that the feed port 33 for the gas M3 is provided at an upstream position in the evaporation region R1 with respect to the flow direction of the liquid M1 and the vapor.

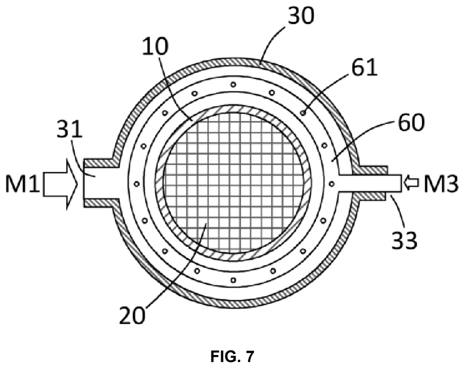

The method for feeding the gas M3 from the feed port 33 is not particularly limited, but as shown in FIG. 7, a pipe 60 having a plurality of discharge ports 61 arranged to cover the outer radial side of the cylindrical member 10 in the flow path between the cylindrical member 10 and the jacket member 30 may be introduced through the feed port 33 for the gas M3, and the gas M3 may be discharged from the discharge ports 61. By discharging the gas M3 using such a pipe 60, the gas M3 can be fed throughout the entire flow path between the cylindrical member 10 and the jacket member 30, thereby enhancing the agitation effect of the liquid M1.
FIG. 7 is a schematic view illustrating a method for introducing the pipe from the feed port 33 (a cross-sectional view orthogonal to the flow direction of the heating medium in the evaporator, when the evaporation region R1 is viewed from the downstream side with respect to the flow direction of the liquid M1 and the vapor).

The gas M3 fed from the feed port 33 is not particularly limited, and various types of gases can be used. For example, air can be used as the gas M3.

The evaporator according to Embodiment 4 of this invention can be produced in the same manner as the method for producing the evaporator according to Embodiment 1, with the exception that the jacket member 30 is provided with the feed port 33 for the gas M3. In the case where the pipe 60 is introduced into the feed port 33, a jacket member 30 into which the pipe 60 has been introduced can be fabricated and then combined with other components.

In the above description, the features of the evaporator according to Embodiment 4 of this invention were described with reference to the evaporator according to Embodiment 1, but the features of the evaporator according to Embodiment 4 of this invention can also provide the same effects as described above even when the features are applied to the evaporators according to Embodiments 2 and 3.

### <Embodiment 5>

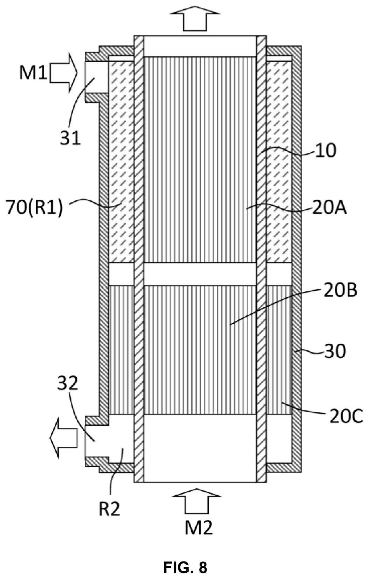

FIG. 8 is a cross-sectional view of an evaporator according to Embodiment 5 of this invention, which is parallel to the flow direction of the heating medium. The components with the same reference numerals as those appearing in the descriptions of the evaporator according to Embodiments 1 to 4 are the same as the components of the evaporator according to Embodiment 5 of this invention. Therefore, detailed descriptions of the same components will be omitted and the different components will be described.

As illustrated in FIG. 8, the evaporator according to Embodiment 5 of this invention is a vertical type evaporator in which the axial direction of the cylindrical member 10 is parallel to the vertical direction, with the evaporation region R1 located above and the heating region R2 located below. In addition, a holding member 70 is disposed in the evaporation region R1. With such a configuration, the liquid M1 fed from the feed port 31 can be easily held in the evaporation region R1 by the holding member 70 until it is vaporized (evaporated), thereby enabling stable generation of vapor.

The holding member 70 is not particularly limited, but it may preferably be at least one selected from a honeycomb structure, a metal fin, a mesh material, and a porous material. Such a component can stably hold the liquid M1 until it vaporizes (evaporates). As used herein, the term "porous" means that the subject has pores. The pores may be opened or closed. The porosity is not particularly limited, but it is preferably 30% or more, and more preferably 40% or more, and even more preferably 50% or more. The porosity is measured using the mercury intrusion method in accordance with JIS R1655: 2003.

The honeycomb structure, the metal fin, the mesh material, and the porous material are not particularly limited, and known members made of various materials can be used.

The evaporator according to Embodiment 5 of this invention can be produced in the same manner as the method for producing the evaporator according to Embodiment 1, with the exception that the holding member 70 is disposed in the evaporation region R1. The timing for placing the holding member 70 in the evaporation region R1 is not particularly limited, and it may be any timing convenient for placing the holding member 70 in the evaporation region R1.

In the above description, the features of the evaporator according to Embodiment 5 of this invention were described with reference to the evaporator according to Embodiment 1, but the features of the evaporator according to Embodiment 5 of this invention can also provide the same effects as described above even when the features are applied to the evaporators according to Embodiments 2 and 3.

### <Embodiment 6>

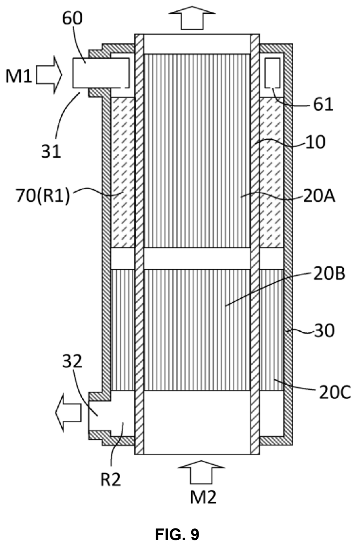

FIG. 9 is a cross-sectional view of an evaporator according to Embodiment 6 of this invention, which is parallel to the flow direction of the heating medium. The components with the same reference numerals as those appearing in the descriptions of the evaporator according to Embodiments 1 to 5 are the same as the components of the evaporator according to Embodiment 6 of this invention. Therefore, detailed descriptions of the same components will be omitted and the different components will be described.

As illustrated in FIG. 9, the evaporator according to Embodiment 6 of this invention is a vertical type evaporator in which the axial direction of the cylindrical member 10 is parallel to the vertical direction, with the evaporation region R1 located above and the heating region R2 located below. In addition, a holding member 70 is disposed in the evaporation region R1. With such a configuration, the liquid M1 fed from the feed port 31 can be easily held in the evaporation region R1 by the holding member 70 until it is vaporized (evaporated), thereby enabling stable generation of vapor. Furthermore, a pipe 60 having a plurality of discharge ports 61 arranged to cover the outer radial side of the cylindrical member 10 in the flow path between the cylindrical member 10 and the jacket member 30 is introduced through the feed port 31 of the liquid M1. The liquid M1 can be discharged from the discharge ports 61. By discharging the liquid M1 using such a pipe 60, the liquid M1 can be fed to the entire flow path between the cylindrical member 10 and the jacket member 30, thereby facilitating vaporization (evaporation) of the liquid M1. The method for introducing the pipe 60 is the same as that in the evaporator according to Embodiment 4 of this invention.

The evaporator according to Embodiment 6 of this invention can be produced in the same manner as the method for producing the evaporator according to Embodiment 1, with the exception that the holding member 70 is disposed in the evaporation region R1 and the pipe 60 is introduced into the feed port 31. When introducing the pipe 60 into the feed port 31, the jacket member 30 in which the pipe 60 has been introduced into the feed port 31 may be produced and assembled with the other members.

In the above description, the features of the evaporator according to Embodiment 6 of this invention were described with reference to the evaporator according to Embodiment 1, but the features of the evaporator according to Embodiment 6 of this invention can also provide the same effects as described above even when the features are applied to the evaporators according to Embodiments 2 and 3.

### <Embodiment 7>

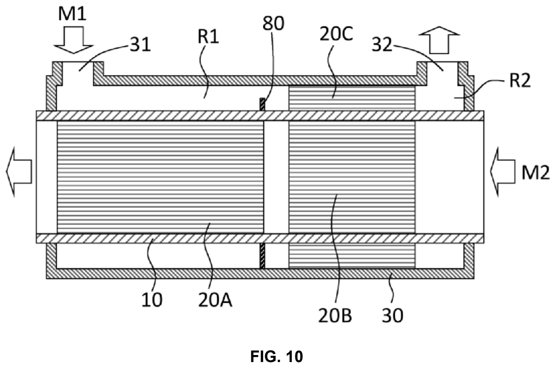

FIG. 10 is a cross-sectional view of an evaporator according to Embodiment 7 of this invention, which is parallel to the flow direction of the heating medium. The components with the same reference numerals as those appearing in the descriptions of the evaporator according to Embodiments 1 to 6 are the same as the components of the evaporator according to Embodiment 7 of this invention. Therefore, detailed descriptions of the same components will be omitted and the different components will be described.

As illustrated in FIG. 10, the evaporator according to Embodiment 7 of this invention is a horizontal type evaporator in which the axial direction of the cylindrical member 10 is parallel to the horizontal direction. A part of a boundary between the evaporation region R1 and the heating region R2 is provided with a separator 80 for preventing the liquid M1 from flowing from the evaporation region R1 into the heating region R2. By providing such a separator 80, the liquid M1 can be prevented from flowing in the heating region R2 while maintaining the liquid state, and the liquid M1 can be sufficiently vaporized (evaporated) in the evaporation region R1, thereby increasing an amount of generated vapor.

The position for providing the separator 80 is not particularly limited as long as it is within the flow path located at the boundary between the evaporation region R1 and the heating region R2. The separator 80 preferably has a shape that completely blocks the lower flow path while allowing a part of the upper flow path to remain open. Such a shape includes a ring shape having a notch formed on the upper side, as illustrated in FIG. 10. Such a shape of the separator 80 can prevent the liquid M1 accumulated in the evaporation region R1 from flowing into the heating region R2 in the liquid form, while allowing the vaporized liquid M1 from the evaporation region R1 to flow into the heating region R2 through the opened upper flow path.

The material of the separator 80 is not particularly limited and it may be, for example, ceramics, glass, or metal.

The evaporator according to Embodiment 7 of this invention can be produced in the same manner as the method for producing the evaporator according to Embodiment 1, with the exception that the separator 80 is disposed at a part of the boundary between the evaporation region R1 and the heating region R2. For example, when the separator 80 is disposed on the outer surface of the cylindrical member 10, the separator 80 may be previously disposed on the outer surface of the cylindrical member 10 and then assembled with other members. Similarly, when the separator 80 is disposed on the inner surface of the jacket member 30, the separator 80 may be previously disposed on the inner surface of the jacket member 30 and then assembled with other members.

In the above description, the features of the evaporator according to Embodiment 7 of this invention were described with reference to the evaporator according to Embodiment 1, but the features of the evaporator according to Embodiment 7 can also provide the same effects even when the features are applied to the evaporators according to Embodiments 2 to 4.

### <Embodiment 8>

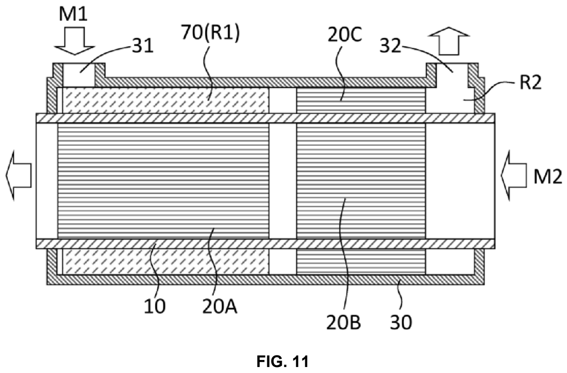

FIG. 11 is a cross-sectional view of an evaporator according to Embodiment 8 of this invention, which is parallel to the flow direction of the heating medium. The components with the same reference numerals as those appearing in the descriptions of the evaporator according to Embodiments 1 to 7 are the same as the components of the evaporator according to Embodiment 8 of this invention. Therefore, detailed descriptions of the same components will be omitted and the different components will be described.

As illustrated in FIG. 11, the evaporator according to Embodiment 8 of this invention is a horizontal type evaporator in which the axial direction of the cylindrical member 10 is parallel to the horizontal direction. In addition, a holding member 70 is disposed in the evaporation region R1. With such a configuration, the liquid M1 fed from the feed port 31 can be easily held in the evaporation region R1 by the holding member 70 until it is vaporized (evaporated), thereby enabling stable generation of vapor.

The holding member 70 is not particularly limited, but it may preferably be at least one selected from a honeycomb structure, a metal fin, a mesh material, and a porous material. Such a component can stably hold the liquid M1 until it vaporizes (evaporates).

The honeycomb structure, the metal fin, the mesh material, and the porous material are not particularly limited, and known members made of various materials can be used.

The evaporator according to Embodiment 8 of this invention can be produced in the same manner as the method for producing the evaporator according to Embodiment 1, with the exception that the holding member 70 is disposed in the evaporation region R1. The timing for placing the holding member 70 in the evaporation region R1 is not particularly limited, and it may be any timing convenient for placing the holding member 70 in the evaporation region R1.

In the above description, the features of the evaporator according to Embodiment 8 of this invention were described with reference to the evaporator according to Embodiment 1, but the features of the evaporator according to Embodiment 8 of this invention can also provide the same effects as described above even when the features are applied to the evaporators according to Embodiments 2 and 3.

### Description of Reference Numerals

10 cylindrical member
20A first heat exchange structure
20B second heat exchange structure
20C third heat exchange structure
21 outer peripheral wall
22 first end face
23 second end face
24 cell
25 partition wall
26 inner peripheral wall
30 jacket member
31 feed port
32 discharge port
33 feed port
40 evaporating structure element
41 heating structure element
50 blocking member
60 pipe
61 discharge port
70 holding member
80 separator
M1 liquid
M2 heating medium
M3 gas
R1 evaporation region
R2 heating region

## Claims

1. An evaporator comprising:
a cylindrical member (10) through which a heating medium (M2) can flow;
a heat exchange structure provided on a radially inner side of the cylindrical member (10); and
a jacket member (30) provided on a radially outer side of the cylindrical member (10) with a space so as to define a flow path for a liquid (M1) and a vapor thereof, the jacket member (30) having a feed port (31) for a liquid (M1) and a discharge port (32) for a vapor.

2. The evaporator according to claim 1, wherein the flow path comprises an evaporation region (R1) for evaporating the liquid (M1) and a heating region (R2) for heating the vapor.

3. The evaporator according to claim 1 or 2, wherein the evaporator comprises:
an evaporating structure element (40) comprising the cylindrical member (10), a first heat exchange structure (20A) provided on a radially inner side of the cylindrical member (10), and the jacket member (30) having a feed port (31) for the liquid (M1);
and a heating structure element (41) comprising the cylindrical member (10), a second heat exchange structure (20B) provided on a radially inner side of the cylindrical member (10), the jacket member (30) having a discharge port (32) for the vapor, and a third heat exchange structure (20C) provided between the cylindrical member (10) and the jacket member (30), and
wherein the evaporating structure element (40) and the heating structure element (41) are directly or indirectly connected to each other.

4. The evaporator according to claim 1 or 2, wherein the heat exchange structure is a honeycomb structure comprising an outer peripheral wall (21) and partition walls (25) provided on an inner side of the outer peripheral wall (21), the partition walls (25) defining a plurality of cells (24) each extending from a first end face (22) to a second end face (23) of the honeycomb structure, and
wherein the heating medium (M2) can flow through the cells (24) of the honeycomb structure.

5. The evaporator according to claim 1 or 2, wherein the heat exchange structure is a hollow honeycomb structure comprising an outer peripheral wall (21), an inner peripheral wall (26) and partition walls (25) provided between the outer peripheral wall (21) and the inner peripheral wall (26), the partition walls (25) defining a plurality of cells (24) each extending from a first end face (22) to a second end face (23) of the hollow honeycomb structure, and
wherein the heating medium (M2) can flow through the cells (24) of the hollow honeycomb structure.

6. The evaporator according to claim 5, wherein an inner side of the inner peripheral wall (26) is provided with a blocking member (50) for preventing the heating medium (M2) from flowing in.

7. The evaporator according to claim 3, wherein the first heat exchange structure (20A) and the second heat exchange structure (20B) are a honeycomb structure comprising an outer peripheral wall (21) and partition walls (25) provided on an inner side of the outer peripheral wall (21), the partition walls (25) defining a plurality of cells (24) each extending from a first end face (22) to a second end face (23) of the honeycomb structure, or a hollow honeycomb structure comprising an outer peripheral wall (21), an inner peripheral wall (26) and partition walls (25) provided between the outer peripheral wall (21) and the inner peripheral wall (26), the partition walls (25) defining a plurality of cells (24) each extending from a first end face (22) to a second end face (23) of the hollow honeycomb structure, and the heating medium (M2) can flow through the cells (24) of the honeycomb structure or the hollow honeycomb structure, and
wherein the third heat exchange structure (20C) is a hollow honeycomb structure comprising an outer peripheral wall (21), an inner peripheral wall (26) and partition walls (25) provided between the outer peripheral wall (21) and the inner peripheral wall (26), the partition walls (25) defining a plurality of cells (24) each extending from a first end face (22) to a second end face (23) of the hollow honeycomb structure, and the vapor can flow through the cells (24) of the hollow honeycomb structure.

8. The evaporator according to any one of claims 1 to 7, wherein a flow direction of the heating medium (M2) is opposite to a flow direction of the liquid (M1) and the vapor thereof.

9. The evaporator according to any one of claims 1 to 8, wherein the evaporator is a vertical type evaporator provided such that an axial direction of the cylindrical member (10) is parallel to a vertical direction.

10. The evaporator according to claim 9, wherein the evaporation region (R1) is located below and the heating region (R2) is located above.

11. The evaporator according to claim 10, wherein the jacket member (30) further comprises a feed port (33) for a gas (M3).

12. The evaporator according to claim 11, wherein a pipe (60) having a plurality of discharge ports (61) provided so as to cover a radial outer side of the cylindrical member (10) within a flow path between the cylindrical member (10) and the jacket member (30) is introduced through the feed port (33) for the gas (M3), and the gas (M3) can be discharged from the discharge ports (61).

13. The evaporator according to claim 9, wherein the evaporation region (R1) is located above and the heating region (R2) is located below.

14. The evaporator according to claim 13, wherein the evaporation region (R1) is provided with at least one selected from a honeycomb structure, a metal fin, a mesh material, and a porous body.

15. The evaporator according to claim 13, wherein a pipe (60) having a plurality of discharge ports (61) provided so as to cover a radial outer side of the cylindrical member (10) within a flow path between the cylindrical member (10) and the jacket member (30) is introduced from the feed port (31) for the liquid (M1), and the liquid (M1) can be discharged from the discharge ports (61).

16. The evaporator according to any one of claims 1 to 8, wherein the evaporator is a horizontal type evaporator provided such that an axial direction of the cylindrical member (10) is parallel to a horizontal direction.

17. The evaporator according to claim 16, wherein a part of a boundary between the evaporation region (R1) and the heating region (R2) is provided with a separator (80) for preventing the liquid (M1) from flowing from the evaporation region (R1) into the heating region (R2).

18. The evaporator according to claim 16 or 17, wherein the evaporation region (R1) is provided with at least one selected from a honeycomb structure, a metal fin, a mesh material, and a porous body.

19. The evaporator according to any one of claims 1 to 18, wherein the liquid (M1) is water.
